# EUROPEAN PATENT SPECIFICATION

(11) **EP 1 655 858 B1**
(45) Date of publication and mention of the grant of the patent: **03.02.2010**
(21) Application number: 05110165.7
(22) Date of filing: 28.10.2005
(51) Int. Cl.: H04B 3/54

(54) **Electrical supply apparatus and electrical power supply module**
Stromversorgungsgeräte und elektrische Versorgungsvorrichtung
Appareil à alimentation électrique et module d'alimentation en puissance électrique

(30) Priority: 08.11.2004 FR 0452552
(43) Date of publication of application: 10.05.2006
(73) Proprietor: Thomson Licensing, 92100 Boulogne-Billancourt (FR)
(72) Inventor: Will, Patrick, 92648 Boulogne cedex (FR); Horr, Olivier, 92648 Boulogne cedex (FR); Launay, Philippe, 92648 Boulogne cedex (FR)
(74) Representative: Le Dantec, Claude

(56) References cited:
- US-A- 4 357 665
- US-A- 6 085 017
- US-A1- 2003 230 935
- US-B1- 6 181 985

## Description

The present invention relates to an electrical supply apparatus and to an electrical power supply module, as well as to a corresponding electrical supply device.

Audiovisual digital processing equipment, such as in particular DVD players/players-recorders (DVD standing for "Digital Versatile Discs "), receiver/decoder boxes (or STBs standing for " Set-Top Boxes"), Hi-Fi receivers (standing for "High Fidelity") or video recorders, are becoming an evermore present part of the family domestic environment. It is not uncommon for homes to have two televisions, a video recorder, an STB, a DVD player and a Hi-Fi receiver.

Now, such multifarious equipment constitutes as many sites of energy consumption, while it is not disconnected from the supply network. This is why, in view of the increasing number of items of equipment connected to the mains, it is becoming evermore essential to make energy savings. Digital equipment thus benefits from specific implementations which follow recommendations in this regard. In particular, two operational statuses of the equipment are distinguished: a normal mode during actual operation and one or more standby mode(s) when not in use, each of these modes having separate consumption.

The relevant recommendations identify several standby modes, mentioned herein below in decreasing order of consumption:
- false standby, having consumption much the same as the normal mode (reduced use);
- true standby when not in use, with possibility of tele-wakeup by remote control;
- and economical standby, in which a wakeup is possible only by the user pressing a button of the item of equipment or by unplugging this item of equipment and plugging it back in (on account of the fact that no activity of a central unit is available in this mode and that no hardware implementation is provided for wakeup by remote control); on the other hand, it is possible to trigger this economical standby mode by remote control.

For example, an STB intended for cable conventionally consumes 10 W, 6 W and 4W respectively in false standby, true standby and economical standby modes. In practice, very low consumption involves deactivation of most of the electronic functions of the digital equipment.

The economical standby modes are the most effective in terms of energy saving, but they are not convenient insofar as the user must move himself in order to manually turn the equipment back on.

Patent US-6085017 describes an energy saving technique for mass market electronic apparatus, relying on the use of a specific circuit for current supply. This circuit has three operational modes: a normal mode, a standby mode and an economical mode, and includes a receiver able to respond to a remote control signal through a selection of one or other of the operational modes.

In the economical mode, only the remote control receiver and an activation filter are supplied with voltage. If the filter detects the reception of a code allocated to the apparatus, it activates a microprocessor monitoring the supply circuit, thus allowing toggling to normal mode.

This technique is especially beneficial insofar as while permitting an economical standby mode, it allows remote activation of the apparatus toggling from the economical standby mode to the normal mode.

However, a drawback is that a battery is required as energy source to supply the microprocessor, although the apparatus is plugged into the mains, on account of the fact that the conventional chopped supplies have mediocre efficiencies under economical standby. More precisely, such supplies have several voltages and require a transformer with non-negligible losses.

What is more, when unplugged from the mains for a prolonged period, the equipment might not restart if the battery is drained. An assumption made in respect of the utilization of this technique is that these unpluggings are not too long, thereby making it possible to maintain a battery with a sufficient voltage. However, such is not necessarily the case.

The present invention relates to an electrical supply apparatus having a normal mode and at least one standby mode, suitable for making remote activation of the normal mode possible from the standby mode, while permitting very low energy consumption in standby mode. Moreover, the apparatus of the invention may not require any battery, and be embodied in such a way as to allow turning on even after a long duration of being unplugged.

The apparatus of the invention may thus render substantial energy savings possible.

The invention also relates to an electrical power supply module and an electrical supply device, corresponding to the apparatus of the invention and having the advantages mentioned hereinabove.

It applies in particular to digital, in particular audiovisual, equipment.

For this purpose, the subject of the invention is an electr ical supply apparatus comprising:
- means of reception of a supply voltage, originating from a supply module able to receive a supply power and to provide for this supply voltage a higher voltage level in normal mode and at least one lower voltage level in standby mode,
- means of activation of at least one functionality of the apparatus, designed to be operational in normal mode and to be disabled in standby mode,
- and means of switching of the supply module which are able to toggle the supply voltage at least from the standby mode to the normal mode.

According to the invention, the apparatus comprises means of communication to the supply module, including the means of switching, means of transmission of a current to the supply module and means of variation of intensity of the current transmitted. These means of communication are capable of controlling a toggling of the supply voltage at least from the standby mode to the normal mode through a variation of this current.

The manner of triggering the toggling from the standby mode to the normal mode appears especially surprising in regard to known techniques: it relies on a communication to the core of the electrical supply (the supply module) of an electrical current, able to be a carrier of information by virtue of variations of intensity. The supply module is for its part capable of reacting to these communications received by current, by modifying the supply voltage so as to toggle from the standby mode to the normal mode.

The communication from the supply module to the electrical supply apparatus relies (solely or among other things) on the supply voltage. Thus, a double procedure of exchanges is defined: by current in one direction, by voltage in the other.

This apparatus may possibly require only very little energy in standby mode, since it is only a question of making possible the emission of the current to the supply module and its variations. A particularly effective embodiment in terms of energy savings is thus possible, without penalizing the user by irksome operations. Specifically, the emission of the current turns out to permit the utilization of remote control signals: the user can then toggle from the standby mode to the normal mode without having to move himself.

The distinction between electrical supply apparatus and supply module must be understood from the functional point of view. In this sense, the invention can cover not only a device including two physically distinct entities embodied separately (specific box for the supply module), but also a single device in which the two entities are integrated.

The embodiments with supply module separate from the apparatus are however especially advantageous. Specifically, the intrinsic losses of such a module may be very low when their output is not loaded. Such a module may in particular consist of a direct current (or DC) wall unit, for which the typical energy losses with unloaded output are of the order of 0.5 W.

A separate supply module preferably comprises a low-cost, low-consumption central unit which allows the module to employ computer resources even in standby mode. This central unit is advantageously capable of processing information pertaining to the reception of remote control signals, originating from the electrical supply apparatus, so as to decide to wake up the apparatus in standby mode.

In the whole of the description, the expressions "normal mode" and "standby mode" are employed interchangeably in respect of the supply module, the electrical supply apparatus and the electrical supply equipment (which includes the module and the apparatus), insofar as the operational status of the supply module determines the operational status of the other two entities.

The electrical supply apparatus of the invention is able to offer in particular the following advantages in its preferred embodiments:
- reduction in energy losses in an item of equipment (apparatus and supply module inclusive), by deactivation in standby mode of the interfaces for energy transmission between the supply module and the apparatus, either automatically, or by an additional hardware implementation; in practice, the standby mode obtained with the apparatus of the invention may lead to a reduction by a factor of 3 in standby mode with respect to the existing economical standby modes, while allowing wakeup by remote control;
- automatic deactivation of the equipment functions in standby mode, insofar as the voltages required to render these functions operational are no longer present;
- possibility of a low level of supply voltage of the apparatus, just sufficient to permit a remote control receiver to be operational; typically, for an infrared receiver, a voltage of 3.3 V is required for a current intensity of less than 5 mA.

Advantageously, the means of variation are designed to produce current spikes, preferably in the form of calibrated current spikes with no return to zero, called NRZ (standing for "Non Return to Zero"). The means of variation then preferably comprise a current source having an activated state and a deactivated state, this source preferably including a junction field effect transistor, also called a JFET.

The use of calibrated spikes turns out to be particularly practical, and makes it possible to efficiently transmit messages independently of the base values of the current - the latter typically having one value in normal mode and another in standby mode.

Moreover, the apparatus advantageously comprises:
- means of sensing of wakeup signals dispatched by a user, preferably including an infrared receiver,
- and means of triggering of the means of switching, able to toggle the supply module from the standby mode to the normal mode when wakeup signals are detected by the means of sensing and when the supply module is in standby mode.

Preferably, the means of switching are not only designed to toggle the supply voltage from the standby mode to the normal mode, but also able to toggle this supply voltage from the normal mode to the standby mode.

Thus, by means of the electrical apparatus it is possible to place the supply module (and hence the whole of the equipment) in standby mode. In the case where the user can remotely control this function and also the wakeup function, he can therefore when he so desires choose to place his equipment in standby mode or to reactivate it remotely.

In a variant of this preferred embodiment (advantageously combined with the previous one), the placing of the supply module on standby is triggered automatically by the means of switching after a predefined duration during which none of the functionalities of the apparatus requiring the normal mode is utilized (latency duration).

According to another embodiment of the system for placing on standby, the automatic toggling from the normal mode to the standby mode is controlled and triggered at the level of the supply module after a latency duration (this embodiment is advantageously associated with the user's capabilities for placing on standby by means of the electrical supply apparatus - by way of the switching means).

In a variant (that may be combined with the previous ones), the supply module has capabilities for placing on standby in case of detection of particular problems (for example an overvoltage).

The electrical supply equipment may have several levels of standby. Thus, in a preferred embodiment for which the supply module has a simple standby mode and an economical standby mode for the standby modes, associated respectively with a first and a second of the lower voltage levels, the second level being lower than the first level:
- the means of switching are able to toggle the supply voltage at least from the economical standby mode and from the simple standby mode to the normal mode,
- and the means of activation are designed in relation to at least a first functionality so as to be operational in normal mode and to be disabled in the standby modes, and in relation to at least one second functionality so as to be operational in normal mode and in simple standby mode and to be disabled in economical standby mode.

Preferably, the means of switching are also able to toggle the supply voltage from the economical standby mode to the simple standby mode. It is thus possible to permit the utilization of the second functionalities without thereby completely waking up the apparatus - energy savings. Advantageously, the means of switching are able to also execute modifications of operational status in the descending direction in terms of consumption, according to various possible procedures.

According to an advantageous form with simple standby and economical standby, the two functionalities include the reception originating from a communication network, of update data, and their possible utilization by updating, local to the equipment, of the data concerned. These latter preferably relate to software and/or to conditional access entitlements. It turns out in fact that a partial wakeup is generally sufficient to carry out these operations, but is however necessary in order for the reception interface to be active.

In a preferred embodiment, the apparatus comprises:
- means of reception of at least one data stream originating from a communication network,
- and means of extraction of control information on the basis of the stream received.

Moreover, the means of communication are designed to transmit the control information to the supply module.

Thus, procedures pertaining to the electrical supply of the equipment may be determined as a function of information or of instructions received remotely via a communication network.

According to a first mode of the means of extraction, the latter are designed to extract scheduling information from temporal tables received, this scheduling information making it possible to perform temporal initializations.

The operations of electrical supply can in this way in particular be synchronized with temporal progress of the data received via the communication network (in particular audiovisual data).

According to a second mode of the means of extraction (advantageously combined with the first), the latter are designed to extract anticipated instructions for temporary toggling of the supply module at least from one of the standby modes associated with one of the lower voltage levels to another of the modes associated with a higher voltage level than this lower level, when the supply module is in this standby mode.

It is thus a question of allowing an ascending movement of wakeup (in particular in the case of the existence of a normal mode, simple standby and economical standby: toggling from economical standby to simple standby and/or to normal mode, and/or toggling from simple standby to normal mode).

This ability to control wakeup periods (partial or complete) via a communication network is especially beneficial in the case of downloads for updating, in particular software or conditional access. Specifically, the anticipated instructions for temporary toggling allow an operator or a broadcaster to define the time slots during which the downloads will be performed, and to transmit them to the users via the communication network. The apparatus is then able to extract these instructions and to transmit them to the supply module for recording and subsequent utilization at the appropriate times.

The instructions extracted are not necessarily designed *a priori* as execution commands, but may take the form of information regarding download schedules utilized as factual instructions at the level of the equipment for toggling to an ascending standby level.

The apparatus is advantageously chosen from among a television, a receiver-decoder box, a DVD player and a Hi-Fi receiver.

The invention also pertains to an electrical power supply module comprising:
- means of reception of a supply power originating from a power source,
- means of transformation of this supply power into a supply voltage intended for at least one electrical supply apparatus,
- means of transmission of this supply voltage to the electrical supply apparatus,
- and means of switching of the means of transformation, able to produce switchings for the supply voltage between a higher voltage level in normal mode and at least one lower voltage level in standby mode

According to the invention, the supply module comprises means of communication originating from the electrical supply apparatus comprising means of reception of a current undergoing variations in intensity and means of extraction of information on the basis of the current received, the means of communication being able to transmit to the means of switching by way of the intensity variations, instructions for switching at least from th is standby mode to the normal mode.

Moreover, the supply module is preferably intended to cooperate with an electrical supply apparatus in accordance with any one of the embodiments of the invention.

The means of extraction of information on the basis of the current received may include in particular a current consumption indicator, allowing detection of variations in intensity.

Preferably, the means of switching are able to produce switchings between the normal mode, a simple standby mode and an economical standby mode, the simple and economical standby modes being associated respectively with a first and a second of the lower voltage levels, the second level being lower than the first level

Moreover, the supply module preferably comprises means of synchronized control of temporary toggling from one of the standby modes associated with one of the lower voltage levels to another of the modes associated with a higher voltage level than this lower level, when the supply module is in this standby mode.

The expression "synchronized" is understood to mean a synchronization with respect to a given reference schedule.

According to a first advantageous form with synchronized control, the means of communication are designed to receive and extract anticipated instructions for temporary toggling from the standby mode to the other mode and the supply module comprises means of recording of these instructions in a storage space.

According to a second advantageous form with synchronized control (preferably combined with the first), the means of communication are designed to receive and extract scheduling information making it possible to perform temporal initializations and the supply module comprises means of temporal initialization on the basis of this scheduling information.

Moreover, the supply module advantageously comprises means of synchronization to the supply power, preferably including a phase locked loop (PLL).

Setting the local schedule in register with the supply power offers a simple and effective means of synchronization, insofar as the supply is done with alternating current, in particular at the frequency of 50 Hz in Europe.

The invention will be better understood and illustrated by means of the following exemplary embodiments and implementations, which are in no way limiting, with reference to the appended figures in which:
- Figure 1 is a basic diagram of electrical supply equipment in accordance with the invention, including an apparatus and a supply module;
- Figure 2 represents in block diagram form the apparatus of Figure 1;
- Figure 3 represents in block diagram form the supply module of Figure 1;
- Figure 4 shows a histogram with three levels of energy consumption of the equipment of Figure 1, as a function of its operational status (normal mode, simple standby, economical standby);
- Figure 5 illustrates a particular implementation of the supply module of Figure 3;
- Figure 6 sets out the variation as a function of time of a supply voltage of the apparatus of Figure 2 by the supply module of Figures 3 and 5, and of a return current from the apparatus to the model, in an exemplary mode of operation of the equipment of Figure 1 with successive togglings between the normal mode and the economical standby mode;
- and Figure 7 represents the variation as a function of time of the supply voltage of the apparatus of Figure 2, during phases of partial automatic wakeup for downloading of update data into the equipment of Figure 1.

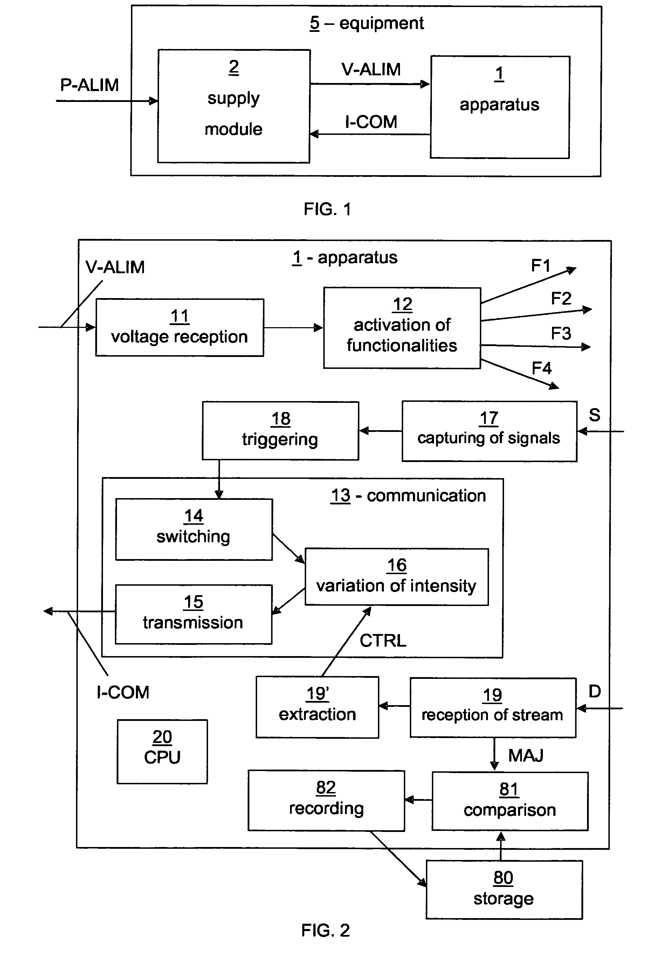

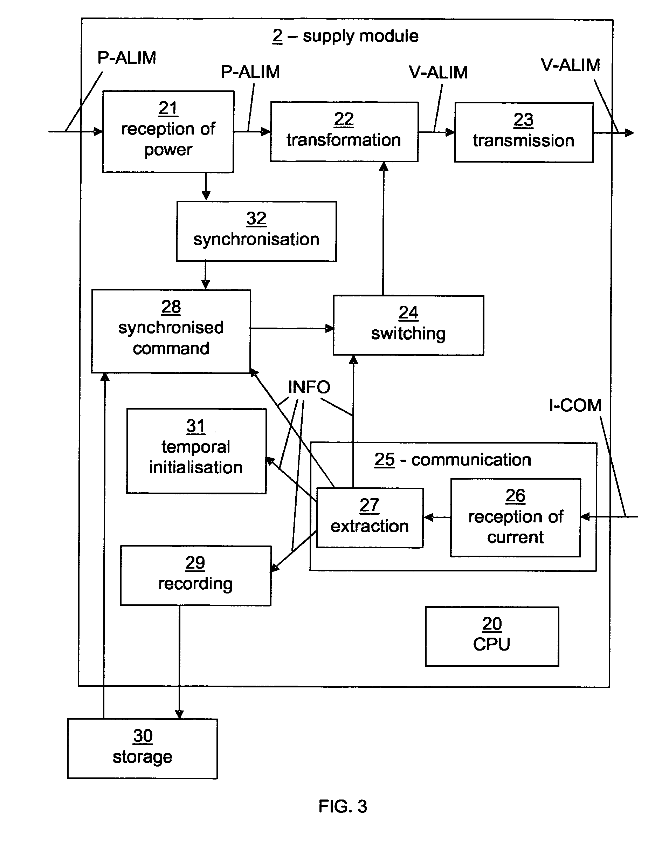

In Figures 2 and 3, the modules represented are functional units, which may or may not correspond to physically distinguishable units. For example, these modules or some of them may be grouped into a single component, or constitute functionalities of one and the same piece of software. On the other hand, certain modules may possibly be composed of separate physical entities.

An electrical supply equipment 5 (Figure 1) comprises an electrical supply apparatus 1, such as for example an STB, and an electrical power supply module 2 for the apparatus 1.

The module 2 is designed to be plugged into the mains and receive a supply power P-ALIM, which takes in particular in Europe the form of an alternating voltage of 230 V at 50 Hz.

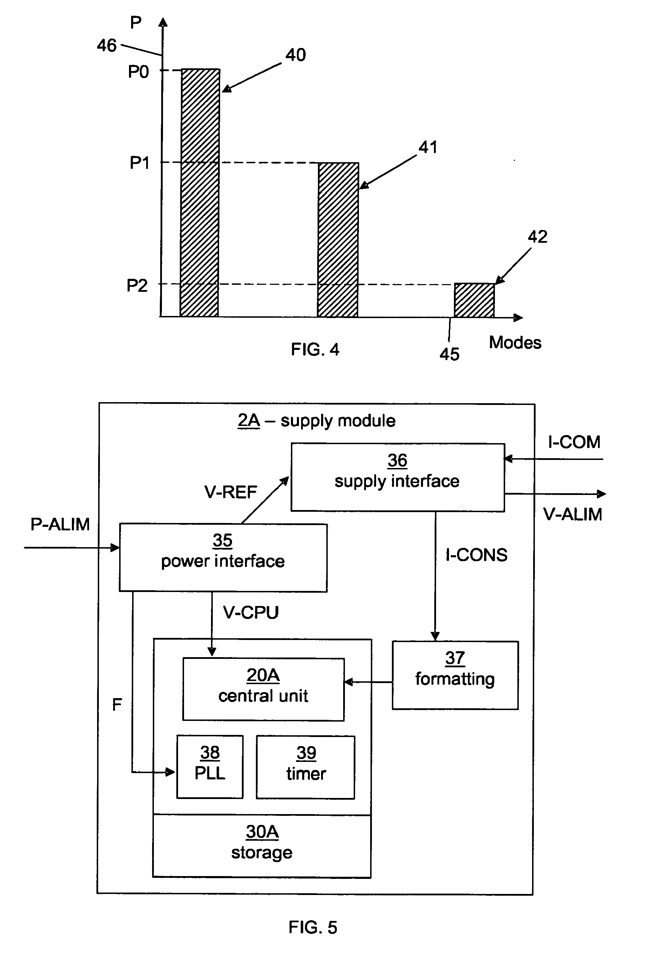

Its function is to deliver to the apparatus 1 a continuous supply voltage V-ALIM produced on the basis of a supply power P-ALIM. Three distinct levels of voltage are possible, depending on the operational status of the equipment 5: a higher voltage V0 in normal mode (nominal voltage), a voltage V1 lower than V0 in simple standby mode, and a voltage V2 lower than V1 in economical standby mode. The energy consumption of the equipment 5 results from the present operational status of the latter; it leads (Figure 4) to an energy consumption P (axis 46) as a function of the modes (axis 45) which equals respectively P0, P1 and P2 (rectangles 40, 41 and 42) for the normal mode, the simple standby mode and the economical standby mode.

The apparatus 1, for its part, is designed to communicate to the module 2 a communication current I-COM, able to transmit information and instructions to the module 2.

The apparatus 1 (Figure 2) more precisely comprises a unit 11 for receiving the supply voltage V-ALIM and a unit 12 for activating functionalities F1, F2, F3, F4 of the apparatus 1. These functionalities Fi are all active in normal mode, and all inactive in economical standby mode. In simple standby mode, only certain of them (here for example, F4) remain operational. In the present case, as will be set out herein below, functionalities for receiving and processing update data are operational in simple standby mode, but not in economical standby mode. On the other hand, functionalities for selecting chains and for interactivity (for an STB), for screen display (brightness, contrast etc) and for sound adjustment are operable only in normal mode (in a variant, the normal mode is also required for updates).

According to a particular procedure of implementation, the activation unit 12 comprises choppers able to detect the higher voltage V0: when the apparatus 1 is in standby mode and the supply voltage V-ALIM becomes equal to V0, the waking up of the apparatus 1 is instructed, and when the supply voltage V -ALIM becomes equal to one of the standby voltages V1 or V2, these choppers cut off by themselves.

The apparatus 1 also comprises a communication unit 13, designed to establish the communication current I-COM and to communicate it to the module 2. This unit 13 includes, in addition to a unit 15 for transmitting the current I-COM to the supply module 2, a unit 16 for varying the intensity of the current I-COM. The latter unit makes it possible to act on the intensity of the current in such a way as to transmit information or instructions to the supply module 2. To do this, it produces calibrated current spikes with no return to zero (NRZ), for example by means of a JFET transistor alternately activated and non-activated. Each spike is then representative of a high logic level.

The communication unit 13 also includes a switching unit 14, whose function is to cause switching between the various operational modes of the equipment 5. The switching unit 14 is able to act on the intensity variation unit 16 in such a way that the latter transmits the appropriate instructions to the module 2. It is also linked to the reception unit 11 so as to be informed of the present operational status of the equipment 5 - so as to determine whether a required mode is or is not already in progress, hence whether a change is necessary.

In a variant embodiment, the operational status commands are systematically communicated to the supply module 2, which takes the decision to proceed or otherwise with a switching as a function of the operational status.

In the particular embodiment described, the switching unit 14 is capable of toggling the supply module 2 (hence the equipment 5):
- from the simple standby or from the economical standby to the normal mode,
- and from the normal mode to the economical standby.

The module 2 is for its part responsible for managing the togglings between the simple and economical standby modes.

The apparatus 1 moreover comprises a unit 17 for sensing wakeup signals S transmitted by a user. In the example considered, it includes an infrared receiver detecting remote control signals. This sensing unit 17 transmits instructions of change of operational status to a unit 18 for triggering of the switching unit 14. This information transmission chain (units 17, 18 and 14, and then units 16 and 15) makes it possible in particular to wake up the equipment 5 with the aid of the remote control.

The intensity variation unit 16 and transmission unit 15 are also designed to communicate remote control parameters beforehand to the module 2 via the current I-COM.

The apparatus 1 is also provided with a unit 19 for receiving a data stream D originating from a communication network. In the example, described, the latter is a broadcasting network, that may consist in particular of an RF, cable or satellite network.

In a variant embodiment, this communication network is a unicast or a multicast network. For example, the STB has a bi-directional return path (such as a DSL line - standing for "Digital Subscriber Line"), through which it receives the data streams D.

An extraction unit 19' is designed to extract control information CTRL from the data streams D received by the reception unit 19, and to communicate them to the intensity variation unit 16 for taking into account in the communication current I-COM.

The control information CTRL comprises in particular scheduling information making it possible to perform temporal initializations, extracted from data pertaining to temporal tables. For example, for broadcasting in accordance with DVB standards (standing for "Digital Video Broadcast"), TDT (standing for "Time Definition Table"), and TOT (standing for "Time Offset Table") tables are transmitted to the broadcast receivers.

The control information CTRL also comprises information on future downloads of update data MAJ to the equipment 5, defined by a network operator. These data MAJ may consist of software data (typically: latest version of an application) and/or of conditional access data (typically: modification of subscription entitlements). The conditional access data are then advantageously carried by permission management messages (or "EMM" standing for "Entitlement Management Messages") and/or permission control messages (or "ECM" standing for "Entitlement Control Messages"). The control information CTRL transmitted gives time slots scheduled for the downloads and specifying the nature of the data to be downloaded. It may include in particular criteria of periodic wakeup.

Control information CTRL of this type is processed by the reception and extraction units 19 and 19' as anticipated instructions of temporary toggling (if need be) of the supply modu le 2 to an operational status sufficient for the equipment 5 to be able to receive and utilize the update data MAJ. In the present embodiment, this sufficient status consists of the simple standby. The anticipated instructions are therefore stored, then used later during the download time slots to:
- verify whether the equipment 5 is in economical standby mode,
- and if such is the case, trigger a toggling to the simple standby mode for a sufficient duration to ensure the complete downloading of the update data MAJ.

A return to the economical standby after this temporary toggling is then envisaged.

In the variant embodiment in which the normal mode is required for these functions for receiving and utilizing update data MAJ (for example in order to attain a sufficient energy level to activate a frontal part of radio frequencies), the operating procedures are similar, the temporary togglings being performed between the economical standby and the normal mode.

The update information communicated by the apparatus 1 to the supply module 2 may moreover be modified at any moment.

In a variant of the example described, which applies to update data MAJ transmitted as a carousel, the temporary togglings from the economical standby to the simple standby (or to the normal mode) are performed periodically, without any prior communication of the transmission schedules being required. The supply module 2 is then woken up (possibly partially) periodically during predefined time spans (for example at night). Moreover, either the update data MAJ missing at the start of the wakeup slots are recovered during their next transmission in the carousel, or the utilization of the update data MAJ begins only at the start of the transmission periods.

Thus, the communication from the apparatus 1 to the supply module 2 is initiated so as to manage either a possible toggling from one operational status to another, or the transfer of temporary wakeup criteria (complete or partial) to the module 2. The communication from the supply module 2 to the apparatus 1 is for its part initiated so as to alter the operational status of the apparatus 1, and hence of the whole of the equipment 5.

The apparatus 1 moreover comprises a unit 81 for comparing the update data MAJ received, with operating data recorded in a storage zone 80 accessible to the equipment 5. A recording unit 82 of the apparatus 1 has the function of recording the update data MAJ in place of the operating data (possibly partially), when these update data MAJ differ from the operating data. In a preferred implementation, the update data MAJ are loaded into volatile memory, verified with respect to their consistency, then saved in non-volatile memory (corresponding to the storage zone 80).

In the example presented, the update data MAJ are received via the reception unit 19 responsible for receiving the data streams D. It is however conceivable for both types of data to be received by the apparatus 1 via two distinct communication networks.

The apparatus 1 is provided with a central unit 10 (or CPU standing for Central Processing Unit), which makes it possible to manage all of the functionalities of the apparatus 1 in a centralized manner (links not represented with the other units).

The supply module 2 (Figure 3) comprises a unit 21 for receiving the supply power P-ALIM, a unit 22 for transforming this power P-ALIM into a supply voltage V-ALIM and a unit 23 for transmitting this voltage V-ALIM to the apparatus 1. It also comprises a switching unit 24 able to act on the transformation unit 22 so as to change the level of the supply voltage V-ALIM. The switching unit 24 thus makes it possible to select one of the operational statuses of the equipment 5 (normal mode, simple standby and economical standby for the supply voltage V-ALIM being equal respectively to V0, V1 and V2).

The module 2 has a communication unit 25 able to receive through a reception unit 26 the communication current I-COM originating from the apparatus 1 and to extract there from through an extraction unit 27 information IN FO transmitted. In order to do this, the extraction unit 27 utilizes the variations in intensity of the current I-COM, for example by averaging this current over a sufficiently significant duration to obtain a quiescent current and by then identifying deviations with respect to the latter. The information INFO extracted may include:
- instructions for switching to an operational status distinct from that in progress, which are transmitted to the switching unit 24 (wakeup or place on standby);
- anticipated instructions of at least partial temporary wakeup (in the example described, toggling from the economical standby mode to the simple standby mode, then return to the economical standby mode);
- and scheduling information for temporal initialization.

The supply module 2 also comprises:
- a unit 31 for temporal initialization on the basis of the initialization scheduling information received from the apparatus 1 via the communication unit 25;
- a unit 29 for recording the temporary wakeup anticipated instructions received from the apparatus 1 via the communication unit 25, in a storage space 30 accessible to the module 2 (in the examples described, this space 30 is a component internal to the module 2);
- a unit 32 for synchronization with the supply power P-ALIM ; this unit 32 includes a phase locked loop (PLL) generating a system clock and a temporal clock that are locked to the supply frequency, for example 50 Hz in Europe;
- and a unit 28 for synchronized control of togglings between various operational statuses, acti ng on the switching unit 24; this control unit 28 is latched in time to the temporal initialization unit 31 and synchronized by means of the synchronization unit 32, and it receives its instructions directly from the communication unit 25 or from the storage space 30 in which the anticipated instructions of temporary toggling are stored.

The module 2 is provided with a central unit 20, which makes it possible to manage all of the functionalities of the module 2 in a centralized manner (links not represented with the other units).

The module 2 will now be detailed in a particular implementation (Figure 5), reference 2A, for which it constitutes a physically separate module CC ("DC pack"). The architecture of the module 2A includes:
- the central unit 20, denoted 20A, which integrates functionalities of switching between the operational statuses (unit 24), of interpreting the information INFO extracted from the communication current I-COM (partially unit 27), and of recording of some of this information INFO (unit 29) in the storage space 30, denoted 30A;
- a phase locked loop 38 (corresponding to the synchronization unit 32) designed to generate the system and temporal clocks required, on the basis of the supply power P-ALIM;
- a timer 39 used for the internal clock, making it possible to trigger wakeups (possibly partial) and placements on standby of the equipment 5, at appropriate moments defined by the temporary wakeup anticipated instructions stored in the storage space 30A (unit 28);
- a supply power interface 35, designed to receive the alternating supply power P-ALIM (unit 21) and to transform it into a low DC voltage V-CPU intended to supply internal components of which the central unit 20A, as well as into a DC reference voltage V-REF utilized to obtain the supply voltage V-ALIM (partially unit 22); moreover, the power interface 35 provides the loop 38 with the supply frequency F used for synchronization (for example 50 Hz in Europe);
- a DC supply interface 36, whose functions are to produce the supply voltage V-ALIM on the basis of the reference voltage V-REF, while taking account of instructions for selecting the operational state originating from the central unit 20A (partially unit 22), to receive the communication current I-COM (unit 26) and to provide an indicator of consumption of current I-CONS (partially unit 27) to a formatting unit 37;
- the formatting unit 37 responsible for formatting the indicator I-CONS into a format comprehensible to the central unit 20A (partially unit 27), making it possible to comprehend the information messages INFO despatched by the apparatus 1 in the form of current spikes NRZ;
- and the storage space 30A, intended for the recording of the temporary wakeup criteria and remote control parameters, obtained through the extracted information INFO, and codes for interpreting the messages received from the formatting unit 37 and for implementing operations as a function of these messages; in a particular example, the storage space 30A comprises a random access memory (or "RAM") for recording the criteria and parameters deduced from the information INFO, and a read only memory (or "ROM") for recording the interpretation codes.

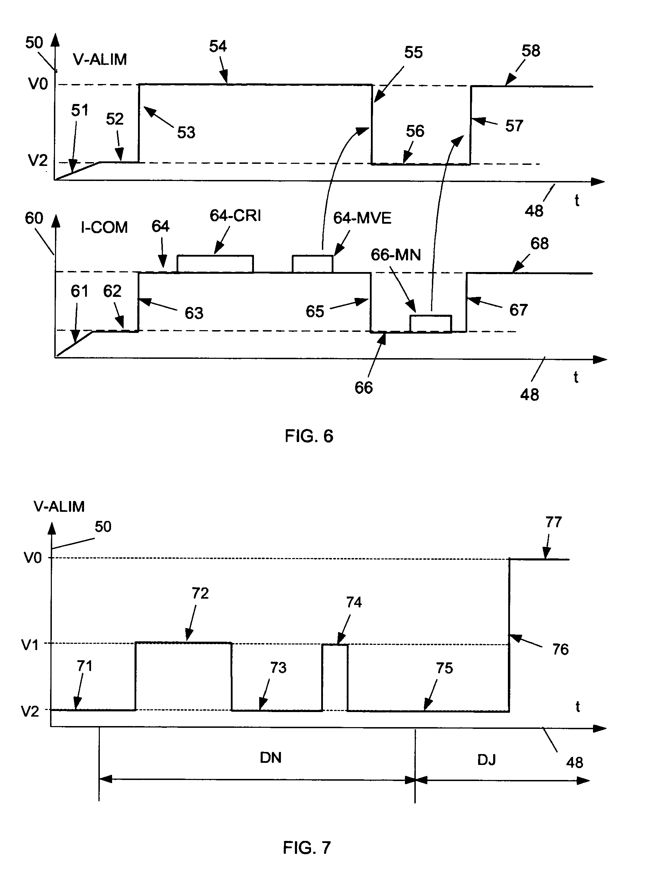

During operation (Figure 6), the equipment 5 described previously produces in the course of time (axis 48) the variations which follow the supply voltage V-ALIM (axis 50) and the communication current I-COM (axis 60).

Firstly, when the equipment 5 (hence the module 2) is plugged into the mains, the voltage V-ALIM rises slowly (zone 51), as does the current I-COM (zone 61). The apparatus 1 is first placed on economical standby (zone 52 associated with the voltage V2 for the voltage and zone 62 for the current), then a wakeup is effected by rise in the voltage V-ALIM up to the value V0 (rise zone 53 and steady zone 54 in respect of voltage, and rise zone 63 and steady zone 64 in respect of the current).

After the waking up of the equipment 5, the apparatus 1 recovers wakeup criteria on the basis of a digital stream transmitted by broadcasting, and it transmits them to the supply module 2 by means of the current I-COM (protuberance of communication 64-CRI for the current).

In normal mode, any infrared command received by the apparatus 1 is transmitted (after processing) to the module 2. In the implementation represented, a standby key is pressed on the remote control and brings about the transmission of an instruction to the module 2 to place it on economical standby (protuberance of communication 64-MVE for the current). The module 2 then produces a drop in the supply voltage V-ALIM down to the value V0 for economical standby (fall zone 55 and steady zone 56, and respectively associated drop zone 65 and steady zone 66 for the current). The voltage drop is slow enough (although this is not visible in Figure 6 on account of the scale) to allow the apparatus 1 to carry out an emergency backup of data (for example the latest program watched and deactivation of chip card).

Once in economical standby mode, infrared commands continue to be transmitted to the central unit 20A of the module 2. In the implementation represented, a wakeup key is pressed on the remote control and brings about the transmission of a wakeup instruction to the module 2 (protuberance of communication 66-MN). The module 2 then increases the supply voltage V-ALIM up to the value V0 of the normal mode (rise zone 57 and steady zone 58, corresponding respectively to the rise zone 67 and steady zone 68 for the current), so that the apparatus 1 reverts to the normal mode.

During night time operation with pre-recorded partial wakeup instructions (Figure 7), the equipment 5 automatically toggles from the economical standby (voltage V2) to the simple standby (voltage V1) in such a way that update downloads can occur. These are scheduled at night on account of the fact that on average, users do not operate their apparatus 1 during this period. The anticipated instructions for partial wakeups are utilized by the module 2.

After a duration of economical wakeup encroaching into the night (steady level 71, entering the night time duration DN), the module 2 triggers a climb in the supply voltage V-ALIM up to the simple standby value V1 at the scheduled moment (steady level 72). During this simple standby, the apparatus 1 seeks to recover new software updates. Then, in accordance with the instructions recorded in the storage space 30A, the module 2 reduces the supply voltage V-ALIM to its economical standby value (steady level 73). Later on, a new predefined partial wakeup allows under similar conditions the apparatus 1 to recover updates of conditional access entitlements (steady level 74), then the module 2 reverts to the economical standby voltage V2 (steady level 75).

Once daytime has been entered (day duration DJ), a user requests a wakeup of the equipment 5 through his remote control, thus causing toggling from the economical standby to the normal mode (rise zone 76 and higher steady level 77 at the voltage V0).

The total energy consumption of the equipment 5 in economical standby mode may be estimated approximately in the following manner in the particular example described, with typical values of implementation.

In the supply module 2, it may be estimated that the central unit 20A operates at a voltage of 3.3 V and consumes a current intensity of 50 mA, thereby leading to a power consumption of 0.165 W (3.3 x 0.05). To this must be added intrinsic losses of the module 2, of the order of 0.5 W. For an efficiency of 40% (conventional rate), the consumption of the module 2 therefore rises to 0.91 W (0.5 + 0.165 x 100/40).

For its part, the apparatus 1 gives rise to energy losses related essentially to the use of the infrared receiver. Typically, the latter requires a voltage of 3.3 V and consumes less than 5 mA. The associated power loss may therefore be estimated at 0.016 W (3.3 x 0.005).

Thus, and taking account of other residual sites of consumption, the total power expended by the equipment 5 on economical standby is estimated to be less than 1.5 W, this representing a significant improvement as compared with the customary economical standby modes (typically by a factor of the order of 3).

## Claims

1. Electrical supply apparatus (1) comprising:
- means of reception (11) of a supply voltage (V-ALIM), originating from a supply module (2) able to receive a supply power (P-ALIM) and to provide for the said supply voltage with using two connecting wires (V-ALIM, I-COM) a higher voltage level (V0) in normal mode and at least one lower voltage level (V1, V2) in standby mode,
- means of activation (12) of at least one functionality of the said apparatus (1), designed to be operational in normal mode and to be disabled in standby mode,
- and means of switching (14) of the said supply module (2) which are able to toggle the said supply voltage (V-ALIM) at least from the said standby mode to the normal mode,
**characterized in that** the said apparatus (1) comprises means of communication (13) to the said supply module (2), including the said means of switching (14), means of transmission (15) of a current (I-COM) to the supply module (2) with using the two connecting wires (V-ALIM, I-COM) and means of variation (16) of intensity of the said current transmitted, the said means of communication (13) being capable of controlling a toggling of the said supply voltage (V-ALIM) at least from the said standby mode to the normal mode through a variation of the said current (I-COM).

2. Apparatus (1) according to Claim 1, **characterized in that** said means of variation (16) are designed to produce current spikes, preferably in the form of calibrated current spikes with no return to zero.

3. Apparatus (1) according to Claim 2, **characterized in that** the means of variation (16) comprise a current source having an activated state and a deactivated state, the said source preferably including a junction field effect transistor.

4. Apparatus (1) according to any one of the preceding claims, **characterized in that** it comprises:
- means of sensing (17) of wakeup signals (S) dispatched by a user, preferably including an infrared receiver,
- and means of triggering (18) of the said means of switching (14), able to toggle the said supply module (2) from the said standby mode to the normal mode when wakeup signals (S) are detected by the means of sensing (17) and when the said supply module (2) is in standby mode.

5. Apparatus (1) according to any one of the preceding claims, **characterized in that** said means of switching (14) are also able to toggle the said supply voltage (V-ALIM) from the normal mode to the standby mode.

6. Apparatus (1) according to any one of the preceding claims, **characterized in that** the supply module (2) having a simple standby mode and an economical standby mode for the said standby modes, associated respectively with a first (V1) and a second (V2) of the lower voltage levels, the second level (V2) being lower than the first level (V1):
the said means of switching (14) are able to toggle the said supply voltage (V-ALIM) at least from the economical standby mode and from the simple standby mode to the normal mode,
and the said means of activation (12) are designed in relation to at least a first functionality so as to be operational in normal mode and to be disabled in the said standby modes, and in relation to at least one second functionality so as to be operational in normal mode and in simple standby mode and to be disabled in economical standby mode.

7. Apparatus (1) according to any one of the preceding claim, **characterized in that** said apparatus (1) comprises:
means of reception (19) of at least one data stream (D) originating from a communication network,
- and means of extraction (19') of control information (CTRL) on the basis of the said stream (D) received,
and **in that** the said means of communication (13) are designed to transmit the said control information (CTRL) to the said supply module (2).

8. Apparatus (1) according to Claim 7, **characterized in that** the said means of extraction (19') are designed to extract scheduling information from temporal tables received, the said scheduling information making it possible to perform temporal initializations.

9. Apparatus (1) according to one of Claims 7 or 8, **characterized in that** the said means of extraction (19') are designed to extract anticipated instructions for temporary toggling of the supply module (2) at least from one of the said standby modes associated with one of the said lower voltage levels (V1, V2) to another of the said modes associated with a higher voltage level (V0, V1) than the said lower level, when the said supply module (2) is in the said standby mode.

10. Apparatus (1) according to any one of the preceding claims, **characterized in that** it is chosen from among a television, a receiver/decoder box, a DVD player and a Hi-Fi receiver.

## Patentansprüche

1. Stromversorgungsvorrichtung (1), die umfasst:
- Mittel für den Empfang (11) einer Versorgungsspannung (V-ALIM), die von einem Versorgungsmodul (2) ausgeht, das eine Versorgungsleistung (P-ALIM) empfangen kann und das unter Verwendung zweier Anschlussdrähte (V-ALIM, I-COM) in der Normalbetriebsart einen höheren Spannungspegel (V0) und in der Bereitschaftsbetriebsart mindestens einen niedrigeren Spannungspegel (V1, V2) für die Versorgungsspannung bereitstellen kann,
- Mittel für die Aktivierung (12) mindestens einer Funktionalität der Vorrichtung (1), die dafür ausgelegt sind, in der Normalbetriebsart funktional zu sein und in der Bereitschaftsbetriebsart gesperrt zu sein,
- Mittel für das Schalten (14) des Versorgungsmoduls (2), die die Versorgungsspannung (V-ALIM) mindestens aus der Bereitschaftsbetriebsart in die Normalbetriebsart umschalten können,
**dadurch gekennzeichnet, dass** die Vorrichtung (1) Mittel für die Kommunikation (13) mit dem Versorgungsmodul (2) umfasst, die die Mittel für das Schalten (14), Mittel für die Sendung (15) eines Stroms (I-COM) an das Versorgungsmodul (2) unter Verwendung der zwei Anschlussdrähte (V-ALIM, I-COM) und Mittel für die Änderung (16) der Stärke des gesendeten Stroms enthalten, wobei die Mittel für die Kommunikation (13) durch eine Änderung des Stroms (I-COM) ein Umschalten der Versorgungsspannung (V-ALIM) mindestens aus der Bereitschaftsbetriebsart in die Normalbetriebsart steuern können.

2. Vorrichtung (1) nach Anspruch 1, **dadurch gekennzeichnet, dass** die Mittel für die Änderung (16) so ausgelegt sind, dass sie Stromspitzen, vorzugsweise in Form kalibrierter Stromspitzen ohne Rückkehr auf null, erzeugen.

3. Vorrichtung (1) nach Anspruch 2, **dadurch gekennzeichnet, dass** die Mittel für die Änderung (16) eine Stromquelle umfassen, die einen aktivierten Zustand und einen deaktivierten Zustand aufweist, wobei die Quelle vorzugsweise einen Sperrschicht-Feldeffekttransistor enthält.

4. Vorrichtung (1) nach einem der vorhergehenden Ansprüche, **dadurch gekennzeichnet, dass** sie umfasst:
Mittel für das Abtasten (17) von durch einen Nutzer abgesendeten Wecksignalen (S), die vorzugsweise einen Infrarotempfänger enthalten,
- und Mittel für das Auslösen (18) der Mittel für das Schalten (14), die das Versorgungsmodul (2) aus der Bereitschaftsbetriebsart in die Normalbetriebsart umschalten können, wenn von den Mitteln zum Abtasten (17) Wecksignale (S) erfasst werden und wenn das Versorgungsmodul (2) in der Bereitschaftsbetriebsart ist.

5. Vorrichtung (1) nach einem der vorhergehenden Ansprüche, **dadurch gekennzeichnet, dass** die Mittel für das Schalten (14) ebenfalls die Versorgungsspannung (V-ALIM) aus der Normalbetriebsart in die Bereitschaftsbetriebsart umschalten können.

6. Vorrichtung (1) nach einem der vorhergehenden Ansprüche, **dadurch gekennzeichnet, dass** das Versorgungsmodul (2) für die Bereitschaftsbetriebsarten eine einfache Bereitschaftsbetriebsart und eine wirtschaftliche Bereitschaftsbetriebsart aufweist, die einem ersten (V1) bzw. einem zweiten (V2) der niedrigeren Spannungspegel zugeordnet sind, wobei der zweite Pegel (V2) niedriger als der erste Pegel (V1) ist:
- wobei die Mittel für das Schalten (14) die Versorgungsspannung (V-ALIM) mindestens aus der wirtschaftlichen Bereitschaftsbetriebsart und aus der einfachen Bereitschaftsbetriebsart in die Normalbetriebsart umschalten können,
- und wobei die Mittel für die Aktivierung (12) mindestens in Bezug auf eine erste Funktionalität so ausgelegt sind, dass sie in der Normalbetriebsart funktional sind und in den Bereitschaftsbetriebsarten gesperrt sind, und mindestens in Bezug auf eine zweite Funktionalität so ausgelegt, dass sie in der Normalbetriebsart und in der einfachen Bereitschaftsbetriebsart funktional sind und in der wirtschaftlichen Bereitschaftsbetriebsart gesperrt sind.

7. Vorrichtung (1) nach einem der vorhergehenden Ansprüche, **dadurch gekennzeichnet, dass** die Vorrichtung (1) umfasst:
- Mittel für den Empfang (19) mindestens eines Datenstroms (D), der von einem Kommunikationsnetz ausgeht,
- und Mittel für die Entnahme (19') von Steuerinformationen (CTRL) auf der Grundlage des empfangenen Stroms (D),
und dadurch, dass die Mittel für die Kommunikation (13) so ausgelegt sind, dass sie die Steuerinformationen (CTRL) an das Versorgungsmodul (2) senden.

8. Vorrichtung (1) nach Anspruch 7, **dadurch gekennzeichnet, dass** die Mittel für die Entnahme (19') so ausgelegt sind, dass sie aus empfangenen zeitlichen Tabellen Planungsinformationen entnehmen, wobei die Planungsinformationen das Ausführen zeitlicher Initialisierungen ermöglichen.

9. Vorrichtung (1) nach einem der Ansprüche 7 oder 8, **dadurch gekennzeichnet, dass** die Mittel für die Entnahme (19') so ausgelegt sind, dass sie erwartete Anweisungen für das zeitliche Umschalten des Versorgungsmoduls (2) mindestens aus einer der Bereitschaftsbetriebsarten, die einem der niedrigeren Spannungspegel (V1, V2) zugeordnet ist, in eine andere der Betriebsarten, die einem höheren Spannungspegel (V0, V1) als dem niedrigeren Spannungspegel zugeordnet ist, entnehmen, wenn das Versorgungsmodul (2) in der Bereitschaftsbetriebsart ist.

10. Vorrichtung (1) nach einem der vorhergehenden Ansprüche, **dadurch gekennzeichnet, dass** sie aus einem Fernsehgerät, einer Empfänger/Decoder-Box, einem DVD-Spieler und einem HiFi-Empfänger gewählt ist.

## Revendications

1. Appareil (1) à alimentation électrique comprenant :
- des moyens de réception (11) d'une tension d'alimentation (V-ALIM), en provenance d'un module d'alimentation (2) apte à recevoir une puissance d'alimentation (P-ALIM) et à fournir pour ladite tension d'alimentation en utilisant deux fils de connexion (V-ALIM, I-COM) un niveau supérieur de tension (V0) en mode normal et au moins un niveau inférieur de tension (V1, V2) en mode veille,
- des moyens d'activation (12) d'au moins une fonctionnalité dudit appareil (1), prévus pour être opérationnels en mode normal et pour être inhibés en mode veille,
- et des moyens de commutation (14) dudit module d'alimentation (2) aptes à faire passer ladite tension d'alimentation (V-ALIM) au moins dudit mode veille au mode normal,
**caractérisé en ce que** ledit appareil (1) comprend des moyens de communication (13) vers ledit module d'alimentation (2), incluant lesdits moyens de commutation (14), des moyens de transmission (15) d'un courant (I-COM) au module d'alimentation (2) en utilisant deux fils de connexion (V-ALIM, I-COM) et des moyens de variation (16) d'intensité dudit courant transmis, lesdits moyens de communication (13) étant capables de commander un passage de ladite tension d'alimentation (V-ALIM) au moins dudit mode veille au mode normal par une variation dudit courant (I-COM).

2. Appareil (1) selon la revendication 1, **caractérisé en ce que** lesdits moyens de variation (16) sont prévus pour produire des pics de courant, préférentiellement sous forme de pics de courant calibrés sans retour à zéro.

3. Appareil (1) selon la revendication 2, **caractérisé en ce que** lesdits moyens de variation (16) comprennent une source de courant ayant un état activé et un état désactivé, ladite source incluant préférentiellement un transistor à effet de champ à jonction.

4. Appareil (1) selon l'une quelconque des revendications précédentes, **caractérisé en ce qu'**il comprend :
- des moyens de captation (17) de signaux d'éveil (S) envoyés par un utilisateur, incluant préférentiellement un récepteur infrarouge,
- et des moyens de déclenchement (18) desdits moyens de commutation (14), aptes à faire passer ledit module d'alimentation (2) dudit mode veille au mode normal lorsque des signaux d'éveil (S) sont détectés par les moyens de captation (17) et que ledit module d'alimentation (2) est en mode veille.

5. Appareil (1) selon l'une quelconque des revendications précédentes, **caractérisé en ce que** lesdits moyens de commutation (14) sont également aptes à faire passer ladite tension d'alimentation (V-ALIM) du mode normal audit mode veille.

6. Appareil (1) selon l'une quelconque des revendications précédentes, **caractérisé en ce que** le module d'alimentation (2) ayant un mode veille simple et un mode veille économique pour lesdits modes veille, associés respectivement à un premier (V1) et un deuxième (V2) des niveaux inférieurs de tension, le deuxième niveau (V2) étant inférieur au premier niveau (V1) :
- lesdits moyens de commutation (14) sont aptes à faire passer ladite tension d'alimentation (V-ALIM) au moins du mode veille économique et du mode veille simple au mode normal,
- et lesdits moyens d'activation (12) sont prévus vis-à-vis d'au moins une première fonctionnalité pour être opérationnels en mode normal et pour être inhibés en lesdits modes veille, et vis-à-vis d'au moins une deuxième fonctionnalité pour être opérationnels en mode normal et en mode veille simple et pour être inhibés en mode veille économique.

7. Appareil (1) selon l'une quelconque des revendications précédentes, **caractérisé en ce que** ledit appareil (1) comprend :
- des moyens de réception (19) d'au moins un flux de données (D) en provenance d'un réseau de communication,
- et des moyens d'extraction (19') d'informations de contrôle (CTRL) à partir dudit flux (D) reçu,
et **en ce que** lesdits moyens de communication (13) sont prévus pour transmettre audit module d'alimentation (2) lesdites informations de contrôle (CTRL).

8. Appareil (1) selon la revendication 7, **caractérisé en ce que** lesdits moyens d'extraction (19') sont prévus pour extraire des informations horaires à partir de tables temporelles reçues, lesdites informations horaires permettant d'effectuer des initialisations temporelles.

9. Appareil (1) selon l'une des revendications 7 ou 8, **caractérisé en ce que** lesdits moyens d'extraction (19') sont prévus pour extraire des instructions anticipées de passage temporaire du module d'alimentation (2) au moins d'un desdits modes veille associé à un desdits niveaux inférieurs de tension (V1, V2) à un autre desdits modes associé à un niveau de tension supérieur (V0, V1) audit niveau inférieur, lorsque ledit module d'alimentation (2) est dans ledit mode veille.

10. Appareil (1) selon l'une quelconque des revendications précédentes, **caractérisé en ce qu'**il est choisi parmi un téléviseur, un boîtier récepteur-décodeur, un lecteur DVD et un récepteur Hi-Fi.
